# EUROPÄISCHE PATENTSCHRIFT

(11) **EP 3 003 240 B1**
(45) Veröffentlichungstag und Bekanntmachung des Hinweises auf die Patenterteilung: **02.08.2017**
(21) Anmeldenummer: 14736301.4
(22) Anmeldetag: 05.06.2014
(51) Int. Cl.: A61G 13/06, A61G 13/10, A61G 7/08, B62B 3/00, B66F 9/065, A61G 7/10, H04B 10/114, G06F 19/00, G08C 23/04

(54) **OPERATIONSTISCHSYSTEM**
OPERATING TABLE SYSTEM
SYSTÈME DE TABLE D'OPÉRATION

(30) Priorität: 06.06.2013 DE 102013105825
(43) Veröffentlichungstag der Anmeldung: 13.04.2016
(73) Patentinhaber: Maquet GmbH, 76437 Rastatt (DE)
(72) Erfinder: RUCH, Jürgen, 77652 Offenburg (DE); BÜRSTNER, Markus, 76137 Karlsruhe (DE); BÖSKE, Winfried, 76135 Karlsruhe (DE); RATHMANN, Dorothee, 77815 Bühl (DE); SCHMOLL, Sebastian, 76437 Rastatt (DE); KOBUß, Matthias, 76593 Gernsbach (DE); BAMOUNI, Bapio, 76287 Rheinstetten (DE); KOTTMANN, Heiko, 76437 Rastatt (DE)
(74) Vertreter: Zacco GmbH
(86) Internationale Anmeldenummer: PCT/EP2014/061666
(87) Internationale Veröffentlichungsnummer: WO 2014/195396

(56) Entgegenhaltungen:
- EP-A1- 0 917 868
- EP-A1- 1 785 119
- GB-A- 2 277 870
- US-A1- 2007 110 448

## Beschreibung

Die Erfindung betrifft ein Operationstischsystem mit einer Transportvorrichtung zum Transportieren einer Patientenlagerfläche, einer mit der Patientenlagerfläche mechanisch koppelbaren Tischsäule, die einen Transfermechanismus aufweist, der in Abhängigkeit eines Transferbefehls zur Übergabe der Patientenlagerfläche zwischen der Transportvorrichtung und der Tischsäule ansteuerbar ist, und einer Bedieneinheit, die zum Erzeugen des Transferbefehls betätigbar ist.

Herkömmliche Operationstischsysteme umfassen häufig eine Tischsäule und eine mit der Tischsäule mechanisch koppelbare, zur Patientenlagerung bestimmte Tischplatte, im Folgenden als Patientenlagerfläche bezeichnet. Hierdurch ist es möglich, die Patientenlagerfläche von der Tischsäule abzunehmen, um beispielsweise den Patienten außerhalb des Operationssaales auf die Operation vorzubereiten oder ihn nach der Operation schneller aus dem Operationssaal zu bringen. Das Zusammenbringen und Trennen von Patientenlagerfläche und Tischsäule wird im Folgenden auch als Lagerflächentransfer bezeichnet. Unterschieden wird dabei zwischen einem präoperativen Lagerflächentransfer und einem postoperativen Lagerflächentransfer.

Bei dem präoperativen Lagerflächentransfer wird ein auf der Patientenlagerfläche liegender Patient mit Hilfe einer Transportvorrichtung in den Operationssaal gefahren. Die im Operationssaal angeordnete Tischsäule befindet sich dabei im eingefahrenen Zustand, so dass die Patientenlagerfläche mit Hilfe der Transportvorrichtung über der Tischsäule angeordnet werden kann. Befinden sich die Transportvorrichtung (und damit die Patientenlagerfläche) und die Tischsäule in einer vorbestimmten Transferanordnung zueinander, so kann die Tischsäule mit Hilfe eines in ihr enthaltenen Transfermechanismus nach oben gefahren werden. Beim Hochfahren kontaktiert die Tischsäule die Patientenlagerfläche von unten und hebt sie aus der Transportvorrichtung heraus. Anschließend kann die Transportvorrichtung entfernt werden. Die Tischsäule und die damit fest verriegelte Patientenlagerfläche können dann entsprechend den Anforderungen der durchzuführenden Operation über elektrische Antriebe geeignet positioniert werden.

Bei dem postoperativen Lagerflächentransfer wird die Transportvorrichtung unter die Patientenlagerfläche gefahren. Befinden sich die Transportvorrichtung und die Tischsäule in der vorbestimmten Transferanordnung zueinander, so wird die Tischsäule nach unten gefahren. Beim Herunterfahren lösen sich die Tischsäule und die Patientenlagerfläche voneinander, während die Patientenlagerfläche von der Transportvorrichtung aufgenommen wird. Anschließend kann die Patientenlagerfäche mitsamt dem Patienten mit Hilfe der Transportvorrichtung aus dem Operationssaal gefahren werden.

Der in der Tischsäule enthaltene Transfermechanismus, durch den die Tischsäule zum Lagerflächentransfer verfahren wird, lässt sich über eine Bedieneinheit steuern. Betätigt ein Benutzer die Bedieneinheit, so erzeugt diese einen der gewählten Funktion entsprechenden Transferbefehl, mit dem der in der Tischsäule enthaltenen Transfermechanismus angesteuert wird, um die Übergabe der Patientenlagerfläche zwischen der Transportvorrichtung und der Tischsäule in der gewünschten Weise durchzuführen.

Bei der Aktivierung des prä- oder postoperativen Lagerflächentransfers muss sichergestellt sein, dass der von dem Benutzer über die Bedieneinheit gewählte Transferbefehl an die richtige Tischsäule gesendet wird. Andere Tischsäulen, die sich in der näheren Umgebung dieser richtigen Säule befinden, dürfen durch den gewählten Transferbefehl nicht angesprochen werden.

Für die korrekte Übermittlung der Transferbefehle an die gewünschte Tischsäule existieren im Stand der Technik verschiedene Lösungen. So ist es beispielsweise möglich, die von dem Benutzer zu betätigende Bedieneinheit direkt in die Tischsäule zu integrieren, etwa in Form eines Bedienpanels, über das sich die wesentlichen Säulenfunktionen auswählen lassen. Eine Verwechselung zwischen verschiedenen Tischsäulen ist damit ausgeschlossen. Jedoch ist diese Lösung für den Benutzer sehr unkomfortabel, da die Tischsäule und damit das in der Tischsäule integrierte Bedienpanel insbesondere während des Lagerflächentransfers nur schlecht zugänglich sind.

Eine andere bekannte Lösung besteht in der Verwendung einer kabelgebundenen Bedieneinheit. Da in diesem Fall die Bedieneinheit über ein Kabel mit der Tischsäule verbunden ist, ergibt sich zwangsläufig eine feste Zuordnung von Bedieneinheit und Tischsäule. Jedoch wird das Kabel häufig als störend empfunden. Außerdem muss die Bedieneinheit immer griffbereit sein.

Eine weitere herkömmliche Lösung besteht darin, als Bedieneinheit ein mit einem Infrarotsender ausgestattetes Handgerät zu verwenden, das mit einem an der Tischsäule angeordneten Infrarotempfänger arbeitet. Die Transferbefehle lassen sich bei dieser Lösung nur dann an die Tischsäule senden, wenn zwischen dem in dem Handgerät vorgesehenen Infrarotsender und dem an der Tischsäule angeordneten Infrarotempfänger eine Sichtverbindung besteht. Um das Ansprechen einer falschen Tischsäule zu vermeiden, wird üblicherweise eine feste Paarung zwischen dem Infrarotsender und dem Infrarotempfänger hergestellt, indem Sender und Empfänger auf ein- und dieselbe Adresse eingestellt werden. Dadurch wird eine Codierung geschaffen, die sicherstellt, dass mit dem Handgerät nur diejenige Tischsäule angesprochen wird, die die vorstehend genannte Adresse aufweist. Problematisch bei dieser Lösung ist, dass unter Umständen das falsche Handgerät verwendet wird. Um dies auszuschließen, verbleibt üblicherweise das Handgerät bei der ihr zugeordneten Tischsäule in dem Operationssaal.

Schließlich ist aus dem Stand der Technik eine Bedieneinheit in Form eines Fußschalters bekannt, der an der Transportvorrichtung angebracht ist. Befinden sich die Transportvorrichtung und die Tischsäule in der korrekten Transferanordnung zueinander, so ist der Fußschalter über ein Gestänge mechanisch mit einem an der Tischsäule angeordneten Schalter gekoppelt. Somit wird eine Druckbeaufschlagung des Fußschalters über das Gestänge auf den Schalter an der Tischsäule übertragen. Die richtige Zuordnung zwischen Bedieneinheit und Tischsäule ist so in jedem Fall sichergestellt. Gleichzeitig ist die Bedienung des Fußschalters für den Benutzer vergleichsweise komfortabel. Jedoch ist diese Lösung insbesondere dadurch, dass die Kopplung zwischen dem Fußschalter und dem an der Tischsäule angeordneten Schalter über ein mechanisches Gestänge erfolgt, vergleichsweise aufwändig. Operationstische, Transportkarren und Transfersysteme sind auch aus GB 2 277 870 bekannt. Aufgabe der Erfindung ist es, ein Operationstischsystem eingangs erläuterter Art so weiterzubilden, dass eine für den Benutzer komfortable und zugleich sichere Übertragung des Transferbefehls an die Tischsäule möglich wird.

Die Erfindung löst diese Aufgabe dadurch, dass die Bedieneinheit mindestens ein an der Transportvorrichtung angeordnetes Bedienelement und einen an der Transportvorrichtung angeordneten, mit dem Bedienelement gekoppelten Infrarotsender aufweist, der mit Betätigen des Bedienelementes den Transferbefehl in Form eines Infrarotsignals aussendet, und dass an der Tischsäule ein Infrarotempfänger angeordnet ist, der den Transferbefehl empfängt.

Die Erfindung sieht also vor, sowohl das Bedienelement, welches der Benutzer zum Erzeugen des Transferbefehls betätigt, als auch den Infrarotsender, der den Transferbefehl an die Tischsäule sendet, an der Transportvorrichtung vorzusehen. Dabei können das Bedienelement und der Infrarotsender an der Transportvorrichtung so angebracht werden, wie dies für ihre jeweilige Funktion am besten geeignet ist. So kann die Positionierung des Infrarotsenders im Hinblick auf die benötigte Sichtverbindung zur Tischsäule optimiert werden. Beispielsweise wird der Infrarotsensor an der Transportvorrichtung so angebracht, dass die Transferbefehle mit einer vergleichsweise geringen Leistung an die Tischsäule gesendet werden können. Demgegenüber kann die Position des Bedienelementes unabhängig von der Lage des Infrarotsensors frei gewählt werden. Insbesondere kann das Bedienelement so an einer für den Benutzer ergonomisch besonders günstigen Stelle der Transportvorrichtung platziert werden. Dies erleichtert die Handhabung der Bedieneinheit erheblich.

Da die Erfindung die Übermittlung des Transferbefehls in Form eines Infrarotsignals vorsieht, kann schon durch die benötigte Sichtverbindung, die durch die Relativanordnung von Infrarotsender und Infrarotempfänger festgelegt ist, ein versehentliches Ansprechen falscher Tischsäulen weitgehend vermieden werden. Dieser Vorteil kann dadurch verstärkt werden, dass der an der Transportvorrichtung angeordnete Infrarotsender das Infrarotsignal mit einer derart geringen Leistung aussendet, dass das Infrarotsignal von dem an der Tischsäule angeordneten Infrarotempfänger praktisch nur dann mit einer auswertbaren Leistung empfangen wird, wenn sich die Transportvorrichtung und die Tischsäule in einer vordefinierten Transferanordnung zueinander befinden, in der die Übergabe der Patientenlagerfläche stattfindet.

Vorzugsweise weist die Bedieneinheit mindestens einen Fußschalter oder einen Fußtaster als Bedienelement auf. Die Verwendung eines Fußschalters oder Fußtasters ist ergonomisch besonders günstig, da der Benutzer die Hände frei hat. So kann er beispielsweise während des Lagerflächentransfers den Patienten behandeln, etwa eine manuelle Beatmung des Patienten durchführen.

In einer möglichen Ausführungsform beinhaltet das mindestens eine Bedienelement zwei monofunktionale Elemente, denen jeweils eine einzige Transferfunktion zugeordnet ist, wobei die Transferfunktion des einen Elementes reziprok zu der Transferfunktion des anderen Elementes ist. Beispielsweise hat das eine der beiden genannten Elemente die Funktion, die Tischsäule hochzufahren, während das andere Element die Funktion hat, die Tischsäule herunterzufahren.

Alternativ beinhaltet das mindestens eine Bedienelement ein bifunktionales Element, dem zwei reziproke Transferfunktionen zugeordnet sind.

In einer besonders bevorzugten Ausgestaltung strahlt der Infrarotsender das Infrarotsignal in einen Raumwinkel ab, der im Wesentlichen auf einen Verfahrbereich begrenzt ist, innerhalb dessen sich der an der Tischsäule angeordnete Infrarotempfänger bewegt, wenn die Tischsäule in einer vorbestimmten Transferanordnung, in der sich die Tischsäule und die Transportvorrichtung zur Übergabe der Patientenlagerfläche zueinander befinden, relativ zu der Transportvorrichtung verfahren wird. Dadurch ist zum einen sichergestellt, dass über den gesamten Verfahrbereich der Tischsäule eine Sichtverbindung zwischen dem Infrarotsender und dem Infrarotempfänger besteht. Zum anderen wird durch die Begrenzung des Raumwinkels, in dem der Infrarotsender das Infrarotsignal abstrahlt, ein unbeabsichtigtes Ansprechen einer anderen Tischsäule zuverlässig vermieden.

Um einen gepaarten Betriebszustand zwischen dem an der Transportvorrichtung angeordneten Infrarotsender und dem an der Tischsäule angeordneten Infrarotempfänger herzustellen, weist die Tischsäule einen Infrarot-Paarungssender zum Aussenden einer Säulenadresse auf, während die Transportvorrichtung einen Infrarot-Paarungsempfänger zum Empfangen der Säulenadresse hat. Mit dem vorstehend genannten gepaarten Betriebszustand ist ein Zustand gemeint, in dem der Infrarotsender der Bedieneinheit derart auf eine einzige Tischsäule eingestellt ist, dass sich nur diese Tischsäule steuerwirksam mit der Bedieneinheit ansprechen lässt. Im Unterschied zu herkömmlichen Infrarot-Fernbedienungssystemen, bei denen entweder eine feste Paarung zwischen der Bedieneinheit und einer einzigen Tischsäule vorgegeben ist oder sich die Paarung nur manuell ändern lässt, ermöglicht diese Ausführungsform gleichsam eine automatische Paarung, indem beispielsweise die von der Tischsäule ausgesendete Säulenadresse von der Transportvorrichtung übernommen und dann in der weiteren Kommunikation mit der Tischsäule als eigene Adresse genutzt wird.

Vorzugsweise sendet der Infrarotsender der Transportvorrichtung bei Inbetriebnahme der Bedieneinheit an den Infrarotempfänger der Tischsäule einen Anforderungsbefehl, durch den der Infrarot-Paarungssender der Tischsäule aufgefordert wird, die Säulenadresse zyklisch auszusenden, wobei der gepaarte Betriebszustand dann vorliegt, wenn der Infrarot-Paarungsempfänger der Transportvorrichtung die Säulenadresse auch zyklisch empfängt. Die vorstehend genannte Inbetriebnahme kann beispielsweise durch eine erstmalige Betätigung der Bedieneinheit realisiert sein, mit der die Tischsäule konkret angesteuert, d.h. zum Lagerflächentransfer verstellt werden soll. Mit Inbetriebnahme kann jedoch auch das Einschalten der Bedieneinheit gemeint sein, also der Beginn der Speisung mit elektrischer Energie, sofern eine solche Einschaltfunktion bei der Bedieneinheit vorgesehen ist.

Durch den zyklischen Empfang der Säulenadresse kann kontinuierlich die bestehende Sichtverbindung zwischen Transportvorrichtung und Tischsäule geprüft werden. Sobald kein zyklischer Empfang der Säulenadresse mehr gegeben ist, wird der gepaarte Betriebszustand aufgehoben und dadurch die Steuerfunktion der Bedieneinheit in Bezug auf die betrachtete Tischsäule außer Kraft gesetzt.

Vorzugsweise liegt der gepaarte Betriebszustand nur vor, solange der Infrarot-Paarungsempfänger ein- und dieselbe Säulenadresse zyklisch empfängt. Dadurch wird vermieden, dass versehentlich nicht nur eine, sondern mehrere Tischsäulen mit der Bedieneinheit angesprochen werden. Der Infrarotsender der Transportvorrichtung sendet den Transferbefehl vorzugsweise nur dann aus, wenn bei Betätigen des Bedienelementes der gepaarte Betriebszustand vorliegt. Ist die Bedieneinheit beispielsweise ein Fußtaster, so wird bei dieser Ausführungsform der Steuerbefehl an die Tischsäule ausgegeben, solange der Fußtaster gedrückt bleibt und zugleich der gepaarte Betriebszustand aufrechterhalten bleibt. Letzteres wird vorzugsweise durch den zyklischen Empfang der Säulenadresse verifiziert.

Die Erfindung wird im Folgenden anhand der Figuren näher erläutert. Darin zeigen:
- Fig. 1: ein Blockdiagramm eines erfindungsgemäßen Operationstischsystems,
- Fig. 2: eine perspektivische Ansicht einer aus einer Transportvorrichtung und einer Tischsäule gebildeten Anordnung;
- Fig. 3: eine weitere perspektivische Ansicht der Anordnung nach Figur 2;
- Fig. 4: eine schematische Darstellung, die das Operationstischsystem zu Beginn eines präoperativen Lagerflächentransfers zeigt;
- Fig. 5: eine schematische Darstellung, die das Operationssystem in der Transferanordnung zeigt;
- Fig. 6: eine schematische Darstellung, die das Operationssystem bei der Herstellung eines gepaarten Betriebszustands zeigt;
- Fig. 7: eine schematische Darstellung, die das Operationssystem bei Beginn der Übernahme der Patientenlagerfläche zeigt;
- Fig. 8: eine schematische Darstellung, die das Operationssystem am Ende der Übernahme der Patientenlagerfläche zeigt; und
- Fig. 9: eine schematische Darstellung, die das Operationssystem am Ende des präoperativen Lagerflächentransfers zeigt.

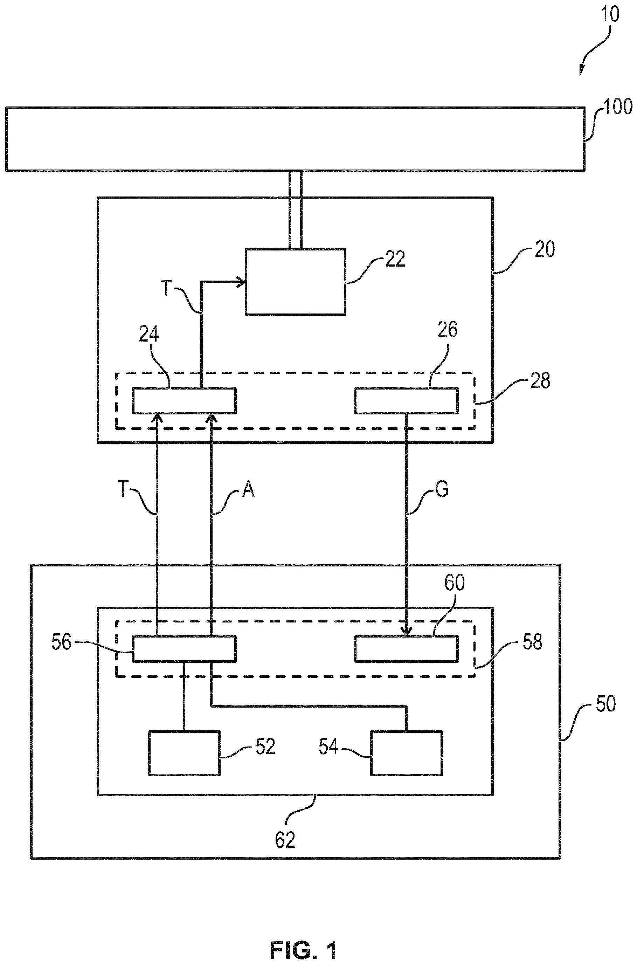

Figur 1 zeigt in einem Blockdiagramm Komponenten eines erfindungsgemäßen Operationstischsystems 10.

Das Operationstischsystem 10 umfasst eine Tischsäule 20, die mit einer Patientenlagerfäche 100 mechanisch koppelbar ist, und eine Transportvorrichtung 50, die dazu dient, die Patientenlagerfläche 100 zu der Tischsäule 20 hin und von dieser weg zu transportieren.

An der Transportvorrichtung 50 sind zwei Fußtaster 52 und 54 angeordnet, die mit einem Infrarotsensor 56 gekoppelt sind. Der Infrarotsensor 56 ist Teil einer allgemein mit 58 bezeichneten ersten Infrarot-Sende-Empfangs-Einheit. Die erste Infrarot-Sende-Empfangs-Einheit 58 enthält neben dem Infrarotsender 56 einen Infrarot-Paarungsempfänger 60. Der Infrarotsender 56 ist beispielsweise aus einer Infrarotstrahlung abgebenden Leuchtdiode gebildet, während der Infrarot-Paarungsempfänger 60 als Fotodiode ausgeführt ist. Die erste Infrarot-Sende-Empfangs-Einheit 58 bildet zusammen mit den beiden Fußtastern 52 und 54 eine in Figur 1 allgemein mit 62 bezeichnete Bedieneinheit.

Die Tischsäule 20 enthält einen Transfermechanismus 22, der dazu dient, die Patientenlagerfläche 100 mit der Tischsäule 20 zu koppeln bzw. von dieser zu entkoppeln. Sowohl die Tischsäule 20 als auch die Patientenlagerfläche 100 verfügen hierzu über an sich bekannte und hier nicht näher beschriebene mechanische Schnittstellen, welche die mechanische Ankopplung und Entkopplung ermöglichen.

Die Tischsäule 20 enthält ferner einen Infrarotempfänger 24, z.B. in Form einer Fotodiode, sowie einen Infrarot-Paarungssender 26, der beispielsweise als Leuchtdiode ausgeführt ist. Der Infrarotempfänger 24 und der Infrarot-Paarungssender 26 bilden eine in Figur 1 allgemein mit 28 bezeichnete zweite Infrarot-Sende-Empfangs-Einheit, die unter der Voraussetzung einer Sichtverbindung mit der an der Transportvorrichtung 50 angeordneten ersten Infrarot-Sende-Empfangs-Einheit 58 über Infrarotsignale kommuniziert.

Der in der Tischsäule 20 enthaltene Transfermechanismus 22 wird zur Übergabe der Patientenlagerfläche 100 in Abhängigkeit eines in Figur 1 mit T bezeichneten Transferbefehls angesteuert. Der Transferbefehl T wird von dem Infrarotsender 56 der ersten Infrarot-Sende-Empfangs-Einheit 58 an den Infrarotempfänger 24 der zweiten Infrarot-Sende-Empfangs-Einheit 28 gesendet, wenn einer der beiden Fußtaster 52 und 54 betätigt wird und zugleich ein gepaarter Betriebszustand zwischen dem Infrarotsender 56 und dem Infrarotempfänger 24 vorliegt. Um diesen gepaarten Betriebszustand herzustellen, sendet der Infrarotsender 56 bei Inbetriebnahme der Bedieneinheit 62 einen in Figur 1 mit A bezeichneten Anforderungsbefehl A an den Infrarotempfänger 24. Besteht eine Sichtverbindung zwischen dem an der Transportvorrichtung 50 angeordneten Infrarotsender 56 und dem an der Tischsäule 20 angeordneten Infrarotempfänger 24, so empfängt der Infrarotempfänger 24 den Anforderungsbefehl A. In diesem Fall wird der in der zweiten Infrarot-Sende-Empfangs-Einheit 28 enthaltene Infrarot-Paarungssensor 26 angewiesen, auf den Anforderungsbefehl A mit der zyklischen Aussendung einer in Figur 1 mit G bezeichneten Geräteadresse zu antworten. Diese wird von dem in der ersten Infrarot-Sende-Empfangs-Einheit 58 enthaltenen Infrarot-Paarungsempfänger 60 empfangen.

Solange der Infrarot-Paarungsempfänger 60 auf den Anforderungsbefehl A hin ein- und dieselbe Geräteadresse G zyklisch empfängt, sind der an der Transportvorrichtung 50 angeordnete Infrarotsender 56 und der an der Tischsäule 20 angeordnete Infrarotempfänger 24 miteinander gepaart. Solange dieser gepaarte Betriebszustand vorliegt, wird bei betätigter Fußtaste 52 bzw. 54 der Transferbefehl T von dem Infrarotempfänger 24 empfangen und in der Tischsäule 20 zur Ansteuerung des Transfermechanismus 22 verwendet. Es versteht sich dabei von selbst, dass der von dem Infrarotsender 56 in Form eines Infrarotsignals ausgegebene Transferbefehl T in der Tischsäule 20 in geeigneter Weise in ein elektrisches Signal umgewandelt wird, um zur Ansteuerung des Transfermechanismus 22 nutzbar zu sein.

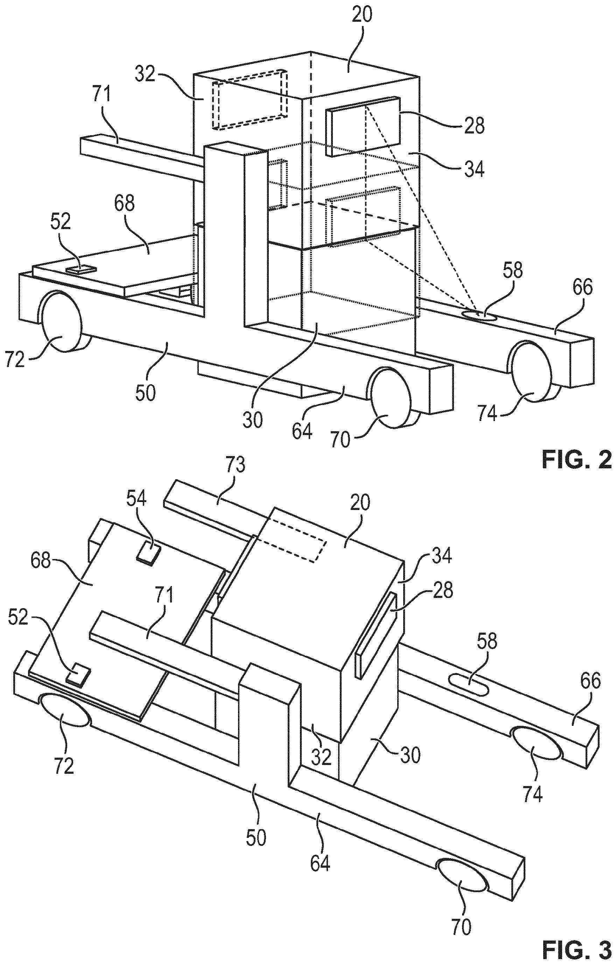

Die Figuren 2 und 3 zeigen beispielhafte Ausführungsformen der Transportvorrichtung 50 und der Tischsäule 20. Dabei sind die Transportvorrichtung 50 und die Tischsäule 20 in den Figuren 2 und 3 in einer korrekten Transferanordnung zueinander gezeigt, in der eine Übergabe der (in den Figuren 2 und 3 nicht gezeigten) Patientenlagerfläche 100 möglich ist.

In der gezeigten Ausführungsform ist die Transportvorrichtung 50 aus einem fahrbaren Gestell gebildet, das zwei parallele Längsholme 64, 66, einen Querträger 68, der die beiden Längsholme 64 und 66 an einem Ende der Transportvorrichtung 50 miteinander verbindet, und zwei Griffteile 71 und 73 umfasst, die oberhalb der beiden Längsholme 64, 66 parallel zu diesen angeordnet sind. Die Transportvorrichtung 50 weist vier Rollen auf, die paarweise auf die Längsholme 64 und 66 verteilt sind. Von den vier Rollen sind in den Figuren 2 und 3 nur drei mit 70, 72 und 74 bezeichnete Rollen zu sehen.

Die Tischsäule 20 ist aus zwei teleskopartig gegeneinander verschiebbaren Säulenteilen 30 und 32 gebildet. Die Tischsäule 20 lässt sich in vertikaler Richtung auseinander- und zusammenfahren, indem die beiden Säulenteile 30 und 32 gegeneinander bewegt werden.

Die erste Infrarot-Sende-Empfangs-Einheit 58, die den Infrarotsender 56 und den Infrarot-Paarungsempfänger 60 beinhaltet, befindet sich auf der Oberseite des einen Längsholms 66. Die zweite Infrarot-Sende-Empfangs-Einheit 28, die den Infrarotempfänger 24 und den Infrarot-Paarungssender 26 enthält, ist an dem oberen Säulenteil 32 der Tischsäule 20 an einer Seitenfläche 34 angeordnet, die in der vordefinierten Transferanordnung der ersten Infrarot-Sende-Empfangs-Einheit 58 zugewandt ist.

In Figur 2 ist die Abstrahlcharakteristik gezeigt, mit der die erste Infrarot-Sende-Empfangs-Einheit 58 (genauer gesagt, deren in Figur 2 nicht explizit gezeigter Infrarotsender 56) die Infrarotsignale auf die Tischsäule 20 aussendet. Die Abstrahlcharakteristik ist durch einen Raumwinkel gekennzeichnet, der im Wesentlichen auf einen Verfahrbereich begrenzt ist, innerhalb dessen sich die zweite Infrarot-Sende-Empfangs-Einheit 28 in vertikaler Richtung bewegt, wenn die beiden Säulenteile 30 und 32 zum Verstellen der Tischsäule 20 gegeneinander bewegt werden. In Figur 2 ist die obere Bewegungsgrenze der zweiten Infrarot-Sende-Empfangs-Einheit 28 mit durchgezogenen Linien und die untere Bewegungsgrenze mit gestrichelten Linien dargestellt.

Bei der in Figur 2 dargestellten Ausführungsform ist auf einer von der Seitenfläche 34 abgewandten Seitenfläche des oberen Säulenteils 32 eine weitere Infrarot-Sende-Empfangs-Einheit angeordnet, die baugleich mit der zweiten Infrarot-Sende-Empfangs-Einheit 28 ist. Somit existieren zwei Transferanordnungen der Transportvorrichtung 50 und der Tischsäule 20 zueinander, in denen sich der Lagerflächentransfer durchführen lässt. Soll nur eine korrekte Transferanordnung möglich sein, so kann diese weitere Infrarot-Sende-Empfangs-Einheit weggelassen werden.

Wie am besten in Figur 3 zu erkennen ist, befinden sich die beiden Fußtaster 52 und 54 auf der Oberseite des Querträgers 68 im Bereich der Längsholme 64 und 66. Sie sind damit für den Benutzer mit seinen Füßen gut zu erreichen, um die erste Infrarot-Sende-Empfangs-Einheit 58 zu betätigen.

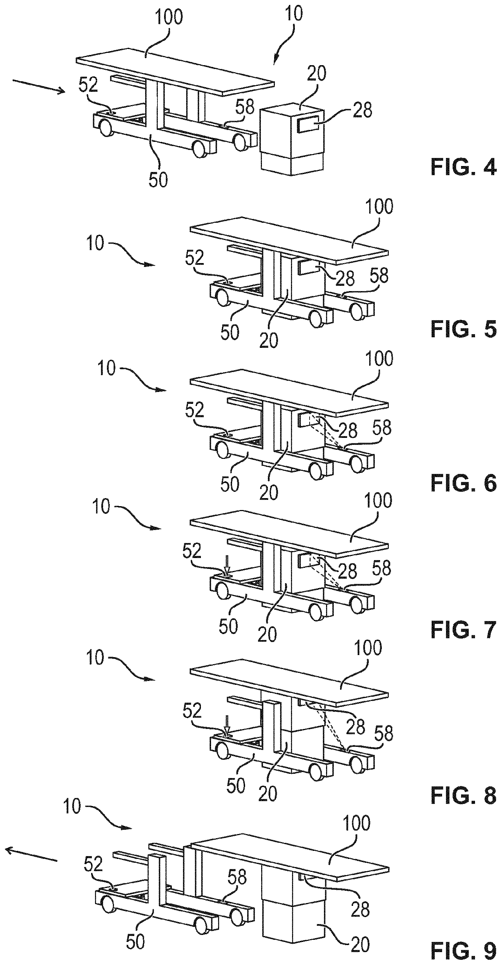

Unter Bezugnahme auf die Figuren 4 bis 9 wird im Folgenden ein Beispiel für einen präoperativen Lagerflächentransfer beschrieben, der mit dem erfindungsgemäßen Operationssystem 10 durchgeführt wird.

Figur 4 zeigt, wie die auf der Transportvorrichtung 50 angeordnete Patientenlagerfläche 100 an die Tischsäule 50 herangeschoben wird. In Figur 5 ist die Transportvorrichtung 50 so positioniert, dass sie sich relativ zur Tischsäule 20 in der vordefinierten Transferanordnung befindet, die eine Übergabe der Patientenlagerfläche 100 an die Tischsäule 20 ermöglicht.

In dieser Transferanordnung werden dann die an der Transportvorrichtung 50 angeordnete erste Infrarot-Sende-Empfangs-Einheit 58 und die an der Tischsäule 20 angeordnete zweite Infrarot-Sende-Empfangs-Einheit 28 miteinander gepaart, indem die erste Infrarot-Sende-Empfangs-Einheit 58 zunächst den Anforderungsbefehl A aussendet und dann die zweite Infrarot-Sende-Empfangs-Einheit 28 mit der zyklischen Aussendung der für die Tischsäule 20 individuell voreingestellten Geräteadresse G antwortet. Diese zyklische Aussendung der Geräteadresse G wird wiederum von der ersten Infrarot-Sende-Empfangs-Einheit 58 registriert und so festgestellt, dass der gewünschte gepaarte Betriebszustand vorliegt.

Sind die beiden Infrarot-Sende-Empfangs-Einheiten 58 und 28 miteinander gepaart, so wird mit Betätigen eines der beiden Fußtaster 52 und 54 der Transferbefehl T von der ersten Infrarot-Sende-Empfangs-Einheit 58 an die zweite Infrarot-Sende-Empfangs-Einheit 28 übermittelt, wie in Figur 7 veranschaulicht ist. Solange der Fußtaster 52 bzw. 54 gedrückt ist, wird demnach der in der Tischsäule 20 enthaltene Transfermechanismus 22 so angesteuert, dass die Tischsäule 20 vertikal nach oben verfahren wird, wie in Figur 8 gezeigt ist.

Sobald die Oberseite der Tischsäule 20 mit der Unterseite der Patientenlagerfläche 100 in Kontakt kommt, wird die Patientenlagerfläche 100 von der Transportvorrichtung 50 abgehoben und von der Tischsäule 20 übernommen. Die Patientenlagerfläche 100 wird dann in an sich bekannter Weise an der Tischsäule 20 verriegelt.

Schließlich wird die Transportvorrichtung 50 von der Tischsäule 20 wegbewegt, wie in Figur 9 gezeigt ist. Damit ist der präoperative Lagerflächentransfer abgeschlossen.

Der in den Figuren nicht explizit gezeigte postoperative Lagerflächentransfer wird entsprechend in umgekehrter Reihenfolge durchgeführt. Wiederum wird zunächst die Transportvorrichtung 50 relativ zu der Tischsäule 20 in die korrekte Transferanordnung gebracht. Anschließend werden die beiden Infrarot-Sende-Empfangs-Einheiten 28 und 58 miteinander gepaart. Mit mit Betätigen des Fußtasters 52, 54 wird dann der in der Tischsäule 20 enthaltene Transfermechanismus 22 zur Übergabe der Patientenlagerfläche 100 an die Transportvorrichtung 50 angesteuert. Schließlich wird die auf der Transportvorrichtung 50 abgesetzte Patientenlagerfläche 100 von der Tischsäule 20 wegtransportiert.

### Bezugszeichenliste

- 20: Tischsäule
- 22: Transfermechanismus
- 24: Infrarotempfänger
- 26: Infrarot-Paarungssender
- 28: zweite Infrarot-Sende-Empfangs-Einheit
- 30, 32: Säulenteile
- 34: Seitenfläche
- 50: Transportvorrichtung
- 52, 54: Fußtaster
- 56: Infrarotsender
- 58: erste Infrarot-Sende-Empfangs-Einheit
- 60: Infrarot-Paarungsempfänger
- 64, 66: Längsholme
- 68: Querträger
- 71, 73: Griffteile
- 70, 72, 74: Rollen
- 100: Patientenlagerfläche
- T: Transferbefehl
- A: Anforderungsbefehl
- G: Geräteadresse

## Patentansprüche

1. Operationstischsystem (10) mit
einer Transportvorrichtung (50) zum Transportieren einer Patientenlagerfläche (100);
einer mit der Patientenlagerfläche (100) mechanisch koppelbaren Tischsäule (20), die einen Transfermechanismus (22) aufweist, der in Abhängigkeit eines Transferbefehls (T) zur Übergabe der Patientenlagerfläche (100) zwischen der Transportvorrichtung (50) und der Tischsäule (20) ansteuerbar ist; und
einer Bedieneinheit (62), die zum Erzeugen des Transferbefehls (T) betätigbar ist;
wobei die Bedieneinheit (62) mindestens ein an der Transportvorrichtung (50) angeordnetes Bedienelement (52, 54) und einen an der Transportvorrichtung (50) angeordneten, mit dem Bedienelement (52, 54) gekoppelten Infrarotsender (56) aufweist, der mit Betätigen des Bedienelementes (52, 54) den Transferbefehl (T) in Form eines Infrarotsignals aussendet, und an der Tischsäule (20) ein Infrarotempfänger (24) angeordnet ist, der den Transferbefehl (T) empfängt,
**dadurch gekennzeichnet, dass**
zum Herstellen eines gepaarten Betriebszustands zwischen dem an der Transportvorrichtung (50) angeordneten Infrarotsender (56) und dem an der Tischsäule (20) angeordneten Infrarotempfänger (24) die Tischsäule (20) einen Infrarot-Paarungssender (26) zum Aussenden einer Säulenadresse (G) und die Transportvorrichtung (50) einen Infrarot-Paarungsempfänger (60) zum Empfangen der Säulenadresse (G) aufweist.

2. Operationstischsystem (10) nach Anspruch 1, **dadurch gekennzeichnet, dass** die Bedieneinheit (62) mindestens einen Fußschalter oder einen Fußtaster (52, 54) als Bedienelement aufweist.

3. Operationstischsystem (10) nach Anspruch 1 oder 2, **dadurch gekennzeichnet, dass** das mindestens eine Bedienelement (52, 54) zwei monofunktionale Elemente beinhaltet, denen jeweils eine einzige Transferfunktion zugeordnet ist, wobei die Transferfunktion des einen Elementes reziprok zu der Transferfunktion des anderen Elementes ist.

4. Operationstischsystem (10) nach Anspruch 1 oder 2, **dadurch gekennzeichnet, dass** das mindestens eine Bedienelement (52, 54) ein bifunktionales Element beinhaltet, dem zwei reziproke Transferfunktionen zugeordnet sind.

5. Operationstischsystem (10) nach einem der vorhergehenden Ansprüche, **dadurch gekennzeichnet, dass** der Infrarotsender (56) das Infrarotsignal in einen Raumwinkel abstrahlt, der im Wesentlichen auf einen Verfahrbereich begrenzt ist, innerhalb dessen sich der an der Tischsäule (20) angeordnete Infrarotempfänger (24) bewegt, wenn die Tischsäule (20) in einer vorbestimmten Transferanordnung, in der sich die Tischsäule (20) und die Transportvorrichtung (50) zur Übergabe der Patientenlagerfläche (100) zueinander befinden, relativ zu der Transportvorrichtung (50) verfahren wird.

6. Operationstischsystem (10) nach einem der vorhergehenden Ansprüche, **dadurch gekennzeichnet, dass** der Infrarotsender (56) und der Infrarot-Paarungsempfänger (60) der Transportvorrichtung (50) eine erste Infrarot-Sende-Empfangs-Einheit (58) bilden und dass der Infrarotempfänger (24) und der Infrarot-Paarungssender (26) der Tischsäule (20) eine zweite Infrarot-Sende-Empfangs-Einheit (28) bilden.

7. Operationstischsystem (10) nach einem der vorhergehenden Ansprüche, **dadurch gekennzeichnet, dass** der Infrarotsender (56) der Transportvorrichtung (50) bei Inbetriebnahme der Bedieneinheit (62) an den Infrarotempfänger (24) der Tischsäule (20) einen Anforderungsbefehl (A) sendet, durch den der Infrarot-Paarungssender (26) der Tischsäule (20) aufgefordert wird, die Säulenadresse (G) zyklisch auszusenden, und dass der gepaarte Betriebszustand vorliegt, wenn der Infrarot-Paarungsempfänger (60) der Transportvorrichtung (50) die Säulenadresse (G) zyklisch empfängt.

8. Operationstischsystem (10) nach Anspruch 7, **dadurch gekennzeichnet, dass** der der gepaarte Betriebszustand nur vorliegt, solange der Infrarot-Paarungsempfänger (60) ein und dieselbe Säulenadresse (G) zyklisch empfängt.

9. Operationstischsystem (10) nach einem der vorhergehenden Ansprüche, **dadurch gekennzeichnet, dass** der Infrarotsender (56) der Transportvorrichtung (50) den Transferbefehl (T) nur aussendet, wenn bei Betätigen des Bedienelementes (52, 54) der gepaarte Betriebszustand vorliegt.

## Claims

1. An operating table system (10), comprised of:
a transport device (50) for transporting a patient supporting surface (100);
a table column (20) which is mechanically couplable to the patient supporting surface (100) and has a transfer mechanism (22) which is controllable based on a transfer command (T) for transferring the patient supporting surface (100) between the transport device (50) and the table column (20); and
an operating unit (62) which can be actuated to generate the transfer command (T);
wherein the operating unit (62) is comprised of at least one operating element (52, 54) disposed on the transport device (50), and an infrared transmitter (56) disposed on the transport device (50) and coupled to the operating element (52, 54), sending the transfer command (T) in the form of an infrared signal in response to actuation of the operating element (52, 54), and an infrared receiver (24) is disposed on the table column (20) and receives the transfer command (T),
**characterized in that**
to produce a matched operating state between the infrared transmitter (56) disposed on the transport device (50) and the infrared receiver (24) disposed on the table column (20), the table column (20) has an infrared pairing transmitter (26) for sending a column address (G), and the transport device (50) has an infrared pairing receiver (60) for receiving the column address (G).

2. The operating table system (10) according to claim 1, **characterized in that** the operating unit (62) has at least one foot switch or foot button (52, 54) as an operating element.

3. The operating table system (10) according to claim 1 or 2, **characterized in that** the at least one operating element (52, 54) is comprised of two monofunctional elements, to each of which a single transfer function is assigned, wherein the transfer function of one of these elements is reciprocal to the transfer function of the other of these elements.

4. The operating table system (10) according to claim 1 or 2, **characterized in that** the at least one operating element (52, 54) is comprised of a bifunctional element to which two reciprocal transfer functions are assigned.

5. The operating table system (10) according to one of the preceding claims, **characterized in that** the infrared transmitter (56) emits the infrared signal over a dihedral angle which is essentially limited to a range of positions relative to the transport device (50), within which the infrared receiver (24) disposed on the table column (20) moves when the table column (20) moves in a predetermined transfer arrangement in which the table column (20) and the transport device (50) are located relative to one another for transfer of the patient support surface (100).

6. The operating table system (10) according to one of the preceding claims, **characterized in that** the infrared transmitter (56) and the infrared pairing receiver (60) of the transport device (50) form a first infrared transmitting and receiving unit (58), and **in that** the infrared receiver (24) and the infrared pairing transmitter (26) of the table column (20) form a second infrared transmitting and receiving unit (28).

7. The operating table system (10) according to one of the preceding claims, **characterized in that** the infrared transmitter (56) of the transport device (50), upon start-up of the operating unit (62), sends an instruction command (A) to the infrared receiver (24) of the table column (20), instructing the infrared pairing transmitter (26) of the table column (20) to cyclically transmit the column address (G), and **in that** the paired operating state is established when the infrared pairing receiver (60) of the transport device (50) cyclically receives the column address (G).

8. The operating table system (10) according to claim 7, **characterized in that** the paired operating state occurs (and persists) only as long as the infrared pairing receiver (60) cyclically receives the same column address (G).

9. The operating table system (10) according to one of the preceding claims, **characterized in that** the infrared transmitter (56) of the transport device (50) only transmits the transfer command (T) if the paired operating state is in effect when the operating element (52, 54) is actuated.

## Revendications

1. Système de table d'opération (10) avec
un dispositif de transport (50) pour le transport d'une surface de support de patient (100) ;
une colonne de table (20) pouvant être couplée mécaniquement à la surface de support de patient (100), qui présente un mécanisme de transfert (22), qui peut être commandé en fonction d'un ordre de transfert (T) pour le transfert de la surface de support de patient (100) entre le dispositif de transport (50) et la colonne de table (20), et
une unité de commande (62), qui peut être actionnée pour la génération de l'ordre de transfert (T) ;
dans lequel l'unité de commande (62) présente au moins un élément de commande (52, 54) agencé au niveau du dispositif de transport (50) et un émetteur infrarouge (56) couplé à l'élément de commande (52, 54), agencé au niveau du dispositif de transport (50), qui émet l'ordre de transfert (T) sous forme de signal infrarouge à l'actionnement de l'élément de commande (52, 54), et un récepteur infrarouge (24), qui reçoit l'ordre de transfert (T), est agencé au niveau de la colonne de table (20),
**caractérisé en ce que**
pour l'établissement d'un état de fonctionnement apparié entre l'émetteur infrarouge (56) agencé au niveau du dispositif de transport (50) et le récepteur infrarouge (24) agencé au niveau de la colonne de table (20), la colonne de table (20) présente un émetteur d'appariement infrarouge (26) pour l'émission d'une adresse de colonne (G) et le dispositif de transport (50) présente un récepteur d'appariement infrarouge (60) pour la réception de l'adresse de colonne (G).

2. Système de table d'opération (10) selon la revendication 1, **caractérisé en ce que** l'unité de commande (62) présente au moins une pédale ou un commutateur au pied (52, 54) en tant qu'élément de commande.

3. Système de table d'opération (10) selon la revendication 1 ou 2, **caractérisé en ce que** l'au moins un élément de commande (52, 54) comporte deux éléments monofonctionnels, auxquels respectivement une seule fonction de transfert est associée, dans lequel la fonction de transfert de l'un élément est réciproque à la fonction de transfert de l'autre élément.

4. Système de table d'opération (10) selon la revendication 1 ou 2, **caractérisé en ce que** l'au moins un élément de commande (52, 54) comporte un élément bifonctionnel, auquel deux fonctions de transfert réciproques sont associées.

5. Système de table d'opération (10) selon l'une quelconque des revendications précédentes, **caractérisé en ce que** l'émetteur infrarouge (56) émet le signal infrarouge dans un angle spatial, qui est sensiblement limité à une plage de déplacement, à l'intérieur de laquelle le récepteur infrarouge (24) agencé au niveau de la colonne de table (20) se déplace, lorsque la colonne de table (20) est déplacée par rapport au dispositif de transport (50) dans un agencement de transfert prédéfini, dans lequel la colonne de table (20) et le dispositif de transport (50) se trouvent l'un par rapport à l'autre pour le transfert de la surface de support de patient (100).

6. Système de table d'opération (10) selon l'une quelconque des revendications précédentes, **caractérisé en ce que** l'émetteur infrarouge (56) et le récepteur d'appariement infrarouge (60) du dispositif de transport (50) forment une première unité d'émission-réception infrarouge (58) et **en ce que** le récepteur infrarouge (24) et l'émetteur d'appariement infrarouge (26) de la colonne de table (20) forment une deuxième unité d'émission-réception infrarouge (28).

7. Système de table d'opération (10) selon l'une quelconque des revendications précédentes, **caractérisé en ce que** l'émetteur infrarouge (56) du dispositif de transport (50) émet un ordre de demande (A) au récepteur infrarouge (24) de la colonne de table (20) à la mise en service de l'unité de commande (62), par lequel il est demandé à l'émetteur d'appariement infrarouge (26) de la colonne de table (20) d'émettre cycliquement l'adresse de colonne (G), et **en ce que** l'état de fonctionnement apparié est présent, lorsque le récepteur d'appariement infrarouge (60) du dispositif de transport (50) reçoit cycliquement l'adresse de colonne (G).

8. Système de table d'opération (10) selon la revendication 7, **caractérisé en ce que** le l'état de fonctionnement apparié n'est présent qu'aussi longtemps que le récepteur d'appariement infrarouge (60) reçoit cycliquement une seule et même adresse de colonne (G).

9. Système de table d'opération (10) selon l'une quelconque des revendications précédentes, **caractérisé en ce que** l'émetteur infrarouge (56) du dispositif de transport (50) n'émet l'ordre de transfert (T) que lorsque l'état de fonctionnement apparié est présent à l'actionnement de l'élément de commande (52, 54).
